# EUROPEAN PATENT APPLICATION

(11) **EP 1 744 315 A1**
(43) Date of publication of application: **17.01.2007**
(21) Application number: 06013534.0
(22) Date of filing: 29.06.2006
(51) Int. Cl.: G11B 20/10

(54) **Method and appliance for copying data from a tape onto a digital video disk**

(30) Priority: 15.07.2005 JP 2005207007
(71) Applicant: Funai Electric Co., Ltd., Daito-shi, Osaka 574-0013 (JP)
(72) Inventor: Tomita, Tomoaki c/o Funai Electric Co., Ltd., Daito-shi Osaka 574-0013 (JP); Sakamoto, Tsutomu c/o Funai Electric Co., Ltd., Daito-shi Osaka 574-0013 (JP)
(74) Representative: Grünecker, Kinkeldey, Stockmair & Schwanhäusser Anwaltssozietät

(57) **Abstract**

A control unit (6) determines whether a flag for instructing execution of finalize process is set (S12). In the case where dubbing is automatically stopped under any of the conditions "no signal in predetermined period," "TAPE-END" and "DISC-FULL," the flag for instructing execution of finalize process is set and thus the control unit (6) executes finalize process (S 13). In contrast, in the case where the flag for instructing execution of finalize process is not set due to the fact for example that the user manually stops the dubbing by means of an operation unit (7), the whole process is ended without execution of finalize process. Accordingly, it is unnecessary for the user to manually perform finalize process while checking a monitor at the spot. Thus, a recording and reproducing apparatus improving the convenience for the user in dubbing from a magnetic tape to a disc medium can be provided.

## Description

### BACKGROUND OF THE INVENTION

### Field of the Invention

The present invention relates to a recording and reproducing apparatus, and particularly to a recording and reproducing apparatus having dubbing capability from a magnetic tape to a disc medium.

### Description of the Background Art

A recording and reproducing apparatus into which a disc recording and reproducing apparatus for recording/reproducing of a DVD (Digital Video Disc/Digital Versatile Disc) and a magnetic recording and reproducing apparatus (VCR: VideoCassette Recorder) for recording/reproducing of a magnetic tape (video tape) are integrated can perform dubbing between the DVD and the magnetic tape (recording or copying from the DVD/the magnetic tape to the magnetic tape/the DVD). In the case where a HDD (Hard Disk Drive) is incorporated, dubbing can be performed between the DVD, the magnetic tape and the hard disk.

Here, it is necessary to perform a process called finalize (inhibit additional data recording) on a DVD-R or DVD-RW on which data has been recorded, for conversion into a format reproducible by other disc reproducing apparatuses. Through this finalize process, the image data recorded on the DVD-R or DVD-RW is reconstructed into the format of the general read-only DVD-ROM.

The disc recording and reproducing apparatus and the HDD perform digital data processing and thus can manage the title and the time of each of record files, file by file. Therefore, in the case for example where a plurality of record files are selected from record files recorded on the hard disk for dubbing to a DVD-R, the apparatus can be set to automatically perform the finalize process after dubbing of all of the selected record files is completed.

However, for the magnetic recording and reproducing apparatus, it is difficult to manage the title and the time of each of record files file by file. Thus, in the case where dubbing for example from a magnetic tape to a DVD-R is performed, the apparatus may be set so that the dubbing is stopped to automatically execute the finalize process under the condition that there is no recordable region left on the DVD-R (DISC-FULL). Otherwise, however, the user has to stop the dubbing operation so that the finalize process is manually executed.

Japanese Patent Laying-Open No. 2002-324321 discloses a dubbing apparatus and a method of a finalize process thereof, with reduced manual operation in the finalize process. According to this publication, in the process where information recorded on such a recording medium as optical disc is reproduced and recorded on a recordable disc, it is determined, when recording for dubbing is completed, whether or not there is a high possibility of additional recording on the recordable disc. If there is the high possibility of additional recording, the recordable disc is not finalized. If there is a low possibility of additional recording, the disc is automatically finalized.

Further, Japanese Patent Laying-Open No. 2004-220648 discloses a recording and reproducing apparatus with which dubbing of record information between media can be done with simple key operation only, dubbing of only the record information can accurately be done and search and edit after the dubbing can be facilitated. According to this publication, in the case where there is no reproduction signal from a media to be reproduced, recording can temporarily be stopped or can be stopped and thus dubbing of a part without reproduction signal can be avoided.

Furthermore, Japanese Patent Laying-Open No. 2004-095120 discloses a dubbing system with which dubbing of an arbitrary dubbing range can easily be performed without using time information. According to this publication, based on the time and the number of record files, a dubbing range may arbitrarily be set so that only the desired part of dubbing can be recorded with simple operation. Moreover, in the case where no time information is recorded on a magnetic tape, an index signal may be used to implement dubbing of record files file by file.

As discussed above, regarding the conventional recording and reproducing apparatuses, the apparatuses can be set, in dubbing from a magnetic tape to a DVD-R, so that the dubbing operation is automatically stopped under the condition "DISC-FULL" so as to execute a finalize process. Otherwise, however, the user has to manually stop the dubbing operation to execute the finalize process, which is thus inconvenient for the user.

### SUMMARY OF THE INVENTION

A chief object of the present invention is therefore to provide a recording and reproducing apparatus with improved convenience for the user in dubbing from a magnetic tape to a disc medium.

In summary, the present invention according to an aspect is a recording and reproducing apparatus having dubbing capability from a video tape to a digital video disc, and includes: a magnetic recording and reproducing unit performing recording and reproduction on the video tape; a disc recording and reproducing unit performing recording and reproduction on the digital video disc; and a control unit controlling operations of the magnetic recording and reproducing unit and the disc recording and reproducing unit. In the state where the magnetic recording and reproducing unit is set in reproduction state while the disc recording and reproducing unit is set in recording state to perform dubbing from the video tape to the digital video disc, when reproduction of the whole of the video tape is completed, the control unit stops the dubbing and performs a finalize process of converting the digital video disc into a reproducible format.

Preferably, the control unit allows the disc recording and reproducing unit to start recording of the digital video disc before allowing the magnetic recording and reproducing unit to start reproduction of the video tape or simultaneously with allowing the magnetic recording and reproducing unit to start reproduction of the video tape.

The present invention according to another aspect is a recording and reproducing apparatus having dubbing capability from a magnetic tape to a disc medium, and includes: a magnetic recording and reproducing unit performing recording and reproduction on the magnetic tape; a disc recording and reproducing unit performing recording and reproduction on the disc medium; and a control unit controlling operations of the magnetic recording and reproducing unit and the disc recording and reproducing unit. In the state where the magnetic recording and reproducing unit is set in reproduction state while the disc recording and reproducing unit is set in recording state to perform dubbing from the magnetic tape to the disc medium, when reproduction of the whole of the magnetic tape is completed, the control unit stops the dubbing and performs a finalize process of converting the disc medium into a reproducible format.

Preferably, the control unit allows the disc recording and reproducing unit to start recording of the disc medium before allowing the magnetic recording and reproducing unit to start reproduction of the magnetic tape or simultaneously with allowing the magnetic recording and reproducing unit to start reproduction of the magnetic tape.

Preferably, the magnetic tape is video tape, and the disc medium is digital video disc.

The present invention according to still another aspect is a recording and reproducing apparatus having dubbing capability from a magnetic tape to a disc medium, and includes: a magnetic recording and reproducing unit performing recording and reproduction on the magnetic tape; a disc recording and reproducing unit performing recording and reproduction on the disc medium; and a control unit controlling operations of the magnetic recording and reproducing unit and the disc recording and reproducing unit. In the state where the magnetic recording and reproducing unit is set in reproduction state while the disc recording and reproducing unit is set in recording state to perform dubbing from the magnetic tape to the disc medium, when there is continuously no reproduction signal of the magnetic tape in a predetermined period, the control unit stops the dubbing and performs a finalize process of converting the disc medium into a reproducible format.

Preferably, the control unit allows the disc recording and reproducing unit to start recording of the disc medium before allowing the magnetic recording and reproducing unit to start reproduction of the magnetic tape or simultaneously with allowing the magnetic recording and reproducing unit to start reproduction of the magnetic tape.

Preferably, the magnetic tape is video tape, and the disc medium is digital video disc.

As seen from the above, according to the present invention, the recording and reproducing apparatus can be set to automatically stop dubbing and then perform the finalize process, in dubbing from a magnetic tape to a disc medium, in the case where reproduction of the whole magnetic tape is completed or there is continuously no reproduction signal from the magnetic tape in a predetermined period. Accordingly, it is unnecessary for the user to manually finalize the disc while checking a monitor at the spot, and thus convenience for the user is improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing a schematic configuration of a recording and reproducing apparatus according to an embodiment of the present invention.
Fig. 2 is a flowchart illustrating a function of automatically stopping the operation of dubbing from a magnetic tape to a DVD.
Fig. 3 is a flowchart illustrating an operation of a finalize process after the dubbing operation is stopped.
Fig. 4 is a flowchart illustrating an operation at the start of dubbing.
Fig. 5 is another flowchart illustrating an operation at the start of dubbing.

### DESCRIPTION OF THE PREFERRED EMBODIMENTS

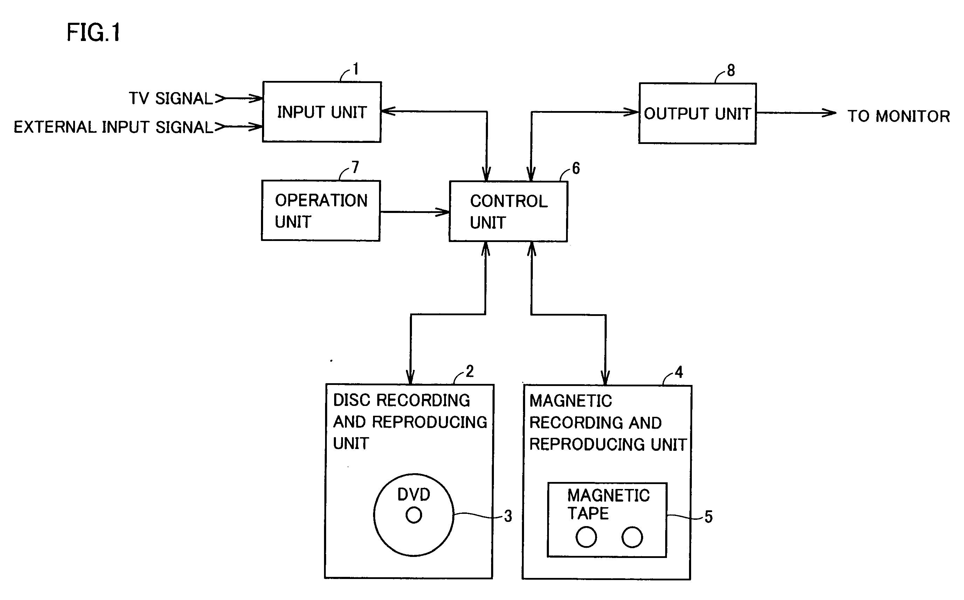

Fig. 1 is a block diagram showing a schematic configuration of a recording and reproducing apparatus according to an embodiment of the present invention. Referring to Fig. 1, the recording and reproducing apparatus includes an input unit 1, a disc recording and reproducing unit 2, a DVD (digital video disc) 3, a magnetic recording and reproducing unit 4, a magnetic tape (video tape) 5, a control unit 6, an operation unit 7, and an output unit 8.

Input unit 1 receives for example a television signal and an external input signal, performs predetermined signal processing such as analog/digital conversion on the signals and provides the resultant signals to control unit 6. Disc recording and reproducing unit 2 performs recording and reproduction on DVD 3. Magnetic recording and reproducing unit 4 performs recording and reproduction on magnetic tape 5.

Control unit 6 outputs the signals received from input unit 1 as record data to disc recording and reproducing unit 2 or magnetic recording and reproducing unit 4, and provides signals reproduced by disc recording and reproducing unit 2 or magnetic recording and reproducing unit 4 to output unit 8. Further, control unit 6 controls operations of input unit 1, disc recording and reproducing unit 2, magnetic recording and reproducing unit 4, and output unit 8. Furthermore, through control unit 6, dubbing (recording) can be performed between DVD 3 and magnetic tape 5.

Output unit 8 receives signals from control unit 6, performs predetermined signal processing such as digital/analog conversion on the signals and provides the resultant signals to a monitor (not shown). A user operates the recording and reproducing apparatus by means of operation unit 7.

An operation is now described of a case where dubbing is performed from magnetic tape 5 to DVD 3 (DVD-R). For dubbing from magnetic tape 5 to DVD 3, magnetic recording and reproducing unit 4 is set in reproduction state while disc recording and reproducing unit 2 is set in recording state, and a reproduction signal of magnetic tape 5 is recorded on DVD 3. Here, control unit 6 has the function of automatically stopping the dubbing operation under a predetermined condition.

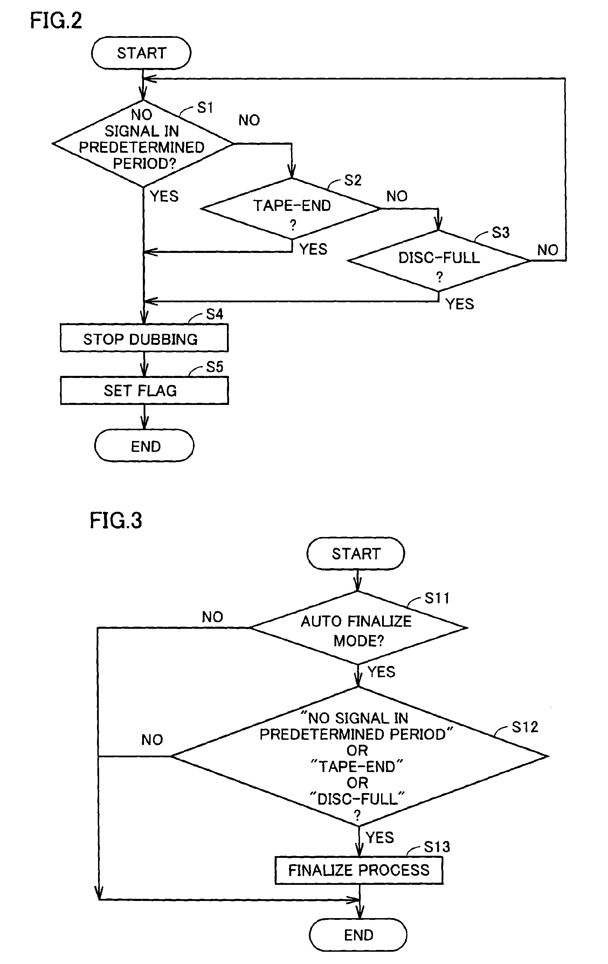

Fig. 2 is a flowchart illustrating a function of automatically stopping the operation of dubbing from magnetic tape 5 to DVD 3. Referring to Fig. 2, in step S1, control unit 6 determines whether there is continuously no reproduction signal of magnetic tape 5 in a predetermined period (a few minutes for example) (no signal in predetermined period?). The determination is made since, in the case where a period in which there is no reproduction signal from the magnetic tape continues for a few minutes, it is highly possible that nothing is recorded on the subsequent portion of the magnetic tape. In the case where there is continuously no reproduction signal from magnetic tape 5 in a predetermined period (YES), the process proceeds to step S4 in which control unit 6 stops the dubbing operation. In contrast, in the case where the condition that there is continuously no reproduction signal in the predetermined period is not satisfied (NO), the process proceeds to step S2.

In step S2, control unit 6 determines whether or not reproduction of the whole magnetic tape 5 is completed (TAPE-END?). The reason why this determination is made is that generally one magnetic tape is used for recording one program in relatively many cases. In the case where reproduction of the whole magnetic tape 5 is completed (YES), the process proceeds to step S4 in which control unit 6 stops the dubbing operation. In contrast, in the case where reproduction of the whole magnetic tape 5 is not completed (NO), the process proceeds to step S3.

In step S3, control unit 6 determines whether or not there is no recordable region on DVD 3 (DISC-FULL?). In the case where there is no recordable region on DVD 3 (YES), the process proceeds to step S4 in which control unit 6 stops the dubbing operation. In contrast, in the case where there is not no recordable region (there remains a recordable region) on DVD 3 (NO), the process returns to step S1.

Here, it is necessary to perform a process called finalize (inhibit additional data recording) for converting a DVD-R or DVD-RW on which data has been recorded into a format that allows the data to be reproduced by other disc reproducing apparatuses. The recording and reproducing apparatus shown in Fig. 1 has auto finalize mode in which the finalize process is automatically performed when the dubbing operation is stopped, as well as manual finalize mode in which the user uses operation unit 7 to manually give an instruction to perform the finalize process. The user can use operation unit 7 to set the recording and reproducing apparatus in the auto finalize mode or the manual finalize mode.

Referring again to Fig. 2, in the case where the recording and reproducing apparatus is set in the auto finalize mode, in step S4, control unit 6 stops the dubbing operation. In step S5, control unit 6 sets a flag for instructing execution of the finalize process. In other words, in the case where the dubbing operation is automatically stopped under any of the conditions "no signal in predetermined period," "TAPE-END" and "DISC-FULL," the flag for instructing execution of the finalize process is set.

Fig. 3 is a flowchart illustrating an operation of the finalize process after the dubbing is stopped. Here, the case where the finalize process is automatically performed includes, for example, the case where the dubbing operation is stopped automatically under any of the conditions "no signal in predetermined period," "TAPE-END" and "DISC-FULL" as shown in Fig. 2 and the case where the user manually stops the dubbing operation by means of operation unit 7.

In step S11, control unit 6 determines whether or not the recording and reproducing apparatus is set in the auto finalize mode. In the case where the recording and reproducing apparatus is set in the auto finalize mode, the process proceeds to step S12. In the case where the recording and reproducing apparatus is not set in the auto finalize mode, control unit 6 does not perform the finalize process to end the whole process.

In step S12, control unit 6 determines whether or not the flag for instructing execution of the finalize process is set. Here, in the case where the flag for instructing execution of the finalize process is set, the process proceeds to step S13 in which control unit 6 executes the finalize process. In the case where the flag for instructing execution of the finalize process is not set, control unit 6 does not execute the finalize process and the whole process is ended. Specifically, in the case where the dubbing operation is automatically stopped under any of the conditions "no signal in predetermined period," "TAPE-END" and "DISC-FULL," the flag for instructing execution of the finalize process is set and accordingly the finalize process is carried out. In contrast, in the case where the dubbing operation is manually stopped by the user by means of operation unit 7 and thus the flag for instructing execution of the finalize process is not set, the finalize process is not performed.

Thus, in dubbing from the magnetic tape to DVD 3 (DVD-R), the conventional art requires that the user manually stops the dubbing operation to perform the finalize process except for the case where no recordable region is left on DVD 3 (DISC-FULL). In contrast, according to the present embodiment, the recording and reproducing apparatus can be set so that the dubbing operation is automatically stopped under any of the conditions "no signal in predetermined period," "TAPE-END" and "DISC-FULL" so as to perform the finalize process. Accordingly, it is unnecessary for the user to manually perform the finalize process while checking the monitor at the spot and thus convenience for the user is improved.

In the following, an operation at the start of dubbing is described.

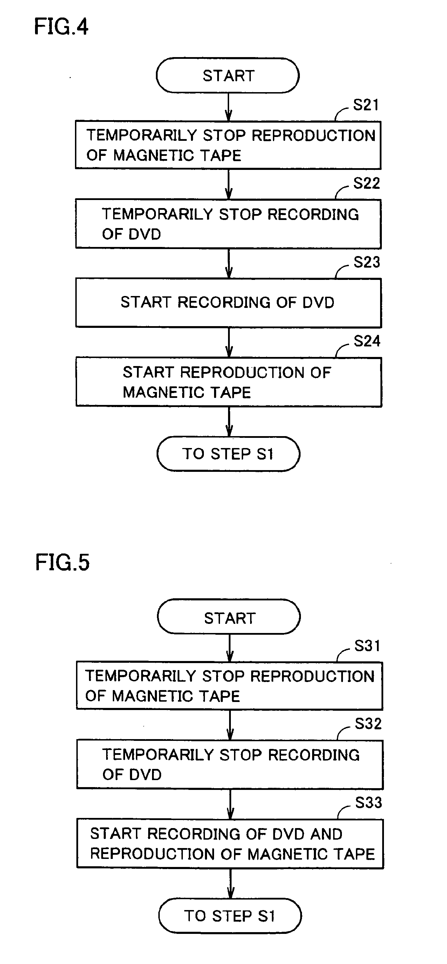

Fig. 4 is a flowchart illustrating the operation at the start of dubbing.

Referring to Figs. 4 and 1, in step S21, control unit 6 temporarily stops the reproducing operation of magnetic recording and reproducing unit 4. In step S22, control unit 6 temporarily stops the recording operation of disc recording and reproducing unit 2.

In step S23, control unit 6 instructs disc recording and reproducing unit 2 to start recording of DVD 3. Next, in step S24, control unit 6 instructs magnetic recording and reproducing unit 4 to start reproduction of magnetic tape 5. After step S24, the process proceeds to step S1 in Fig. 2.

As shown in steps S23, S24, recording of DVD 3 is started prior to reproduction of magnetic tape 5. Thus, the problem that the initial part of the contents of magnetic tape 5 to be reproduced are not actually recorded on DVD 3 does not occur.

Fig. 5 is another flowchart illustrating an operation at the start of dubbing.

Referring to Figs. 5 and 1, in step S31, control unit 6 temporarily stops the reproducing operation of magnetic recording and reproducing unit 4. In step S32, control unit 6 temporarily stops the recording operation of disc recording and reproducing unit 2.

In step S33, control unit 6 instructs disc recording and reproducing unit 2 to start recording of DVD 3 and instructs magnetic recording and reproducing unit 4 to start reproduction of magnetic tape 5. Thus, reproduction of magnetic tape 5 and recording of DVD 3 are simultaneously performed. After step S33, the process proceeds to step S1 in Fig. 2.

As shown in steps S21, S22 in Fig. 4 and steps S31, S32 in Fig. 5, prior to the start of recording of DVD 3, control unit 6 temporarily stops both of the reproducing operation of magnetic recording and reproducing unit 4 and the recording operation of the disc recording and reproducing unit 2. Accordingly, even if a noise signal is generated at the start of the reproduction of magnetic tape 5, the noise signal is not recorded on DVD 3 or the noise signal actually recorded on DVD 3 is small in amplitude.

Moreover, magnetic recording and reproducing unit 4 has a magnetic head and disc recording and reproducing unit 2 has an optical pickup. A certain time is necessary from the state where the magnetic head and the optical pickup are stopped to the actual start of operation. In terms of the length of the aforementioned time, if the magnetic head and the optical pickup differ from each other, it is necessary for control unit 6 to adjust the operation-start timing of the magnetic head and the optical pickup with respect to each other, so that the contents of magnetic tape 5 are recorded on DVD 3 from the initial part of the contents. However, both of the reproducing operation of magnetic recording and reproducing unit 4 and the recording operation of disc recording and reproducing unit 2 may be temporarily stopped so as to immediately start the dubbing operation. Accordingly, such a problem as described above can be prevented.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A recording and reproducing apparatus having dubbing capability from a video tape (5) to a digital video disc (3), comprising:
a magnetic recording and reproducing unit (4) performing recording and reproduction on said video tape (5);
a disc recording and reproducing unit (2) performing recording and reproduction on said digital video disc (3); and
a control unit (6) controlling operations of said magnetic recording and reproducing unit (4) and said disc recording and reproducing unit (2), wherein
in the state where said magnetic recording and reproducing unit (4) is set in reproduction state while said disc recording and reproducing unit (2) is set in recording state to perform dubbing from said video tape (5) to said digital video disc (3), when reproduction of the whole of said video tape (5) is completed, said control unit (6) stops the dubbing and performs a finalize process (S 13) of converting said digital video disc (3) into a reproducible format.

2. The recording and reproducing apparatus according to claim 1, wherein
said control unit (6) allows said disc recording and reproducing unit (2) to start recording of said digital video disc (3) before allowing said magnetic recording and reproducing unit (4) to start reproduction of said video tape (5) or simultaneously with allowing said magnetic recording and reproducing unit (4) to start reproduction of said video tape (5).

3. A recording and reproducing apparatus having dubbing capability from a magnetic tape (5) to a disc medium (3), comprising:
a magnetic recording and reproducing unit (4) performing recording and reproduction on said magnetic tape (5);
a disc recording and reproducing unit (2) performing recording and reproduction on said disc medium (3); and
a control unit (6) controlling operations of said magnetic recording and reproducing unit (4) and said disc recording and reproducing unit (2), wherein
in the state where said magnetic recording and reproducing unit (4) is set in reproduction state while said disc recording and reproducing unit (2) is set in recording state to perform dubbing from said magnetic tape (5) to said disc medium (3), when reproduction of the whole of said magnetic tape (5) is completed, said control unit (6) stops the dubbing and performs a finalize process (S13) of converting said disc medium (3) into a reproducible format.

4. The recording and reproducing apparatus according to claim 3, wherein
said control unit (6) allows said disc recording and reproducing unit (2) to start recording of said disc medium (3) before allowing said magnetic recording and reproducing unit (4) to start reproduction of said magnetic tape (5) or simultaneously with allowing said magnetic recording and reproducing unit (4) to start reproduction of said magnetic tape (5).

5. The recording and reproducing apparatus according to claim 3, wherein
said magnetic tape (5) is video tape, and said disc medium (3) is digital video disc.

6. A recording and reproducing apparatus having dubbing capability from a magnetic tape (5) to a disc medium (3), comprising:
a magnetic recording and reproducing unit (4) performing recording and reproduction on said magnetic tape (5);
a disc recording and reproducing unit (2) performing recording and reproduction on said disc medium (3); and
a control unit (6) controlling operations of said magnetic recording and reproducing unit (4) and said disc recording and reproducing unit (2), wherein
in the state where said magnetic recording and reproducing unit (4) is set in reproduction state while said disc recording and reproducing unit (2) is set in recording state to perform dubbing from said magnetic tape (5) to said disc medium (3), when there is continuously no reproduction signal of said magnetic tape (5) in a predetermined period, said control unit (6) stops the dubbing and performs a finalize process (S13) of converting said disc medium (3) into a reproducible format.

7. The recording and reproducing apparatus according to claim 6, wherein
said control unit (6) allows said disc recording and reproducing unit (2) to start recording of said disc medium (3) before allowing said magnetic recording and reproducing unit (4) to start reproduction of said magnetic tape (5) or simultaneously with allowing said magnetic recording and reproducing unit (4) to start reproduction of said magnetic tape (5).

8. The recording and reproducing apparatus according to claim 6, wherein
said magnetic tape (5) is video tape, and said disc medium (3) is digital video disc.
